# EUROPEAN PATENT SPECIFICATION

(11) **EP 2 362 627 B1**
(45) Date of publication and mention of the grant of the patent: **26.06.2019**
(21) Application number: 11155330.1
(22) Date of filing: 22.02.2011
(51) Int. Cl.: H04N 1/00, H04N 1/32, G06F 16/00

(54) **Location-based communication method and system**
Ortbasiertes Kommunikationsverfahren und -system
Procédé et système de communication de type localisation

(30) Priority: 22.02.2010 US 709612; 21.02.2011 KR 20110014977
(43) Date of publication of application: 31.08.2011
(73) Proprietor: Samsung Electronics Co., Ltd., Suwon-si, Gyeonggi-do, 443-742 (KR)
(72) Inventor: Shacham, Amir, 442-742, Gyeonggi-do (KR); Oks, Eduard, 442-742, Gyeonggi-do (KR); Toledano, Eyal, 442-742, Gyeonggi-do (KR); Bregman-Amitai, Orna, 442-742, Gyeonggi-do (KR)
(74) Representative: HGF Limited

(56) References cited:
- EP-A1- 1 734 341
- US-A1- 2007 024 527
- US-A1- 2007 032 244
- US-A1- 2008 147 730
- US-A1- 2009 096 875
- US-A1- 2009 248 300
- US-A1- 2009 292 464
- US-A1- 2010 039 505

## Description

### BACKGROUND OF THE INVENTION

### 1. Field of the Invention

The present invention relates to a novel communication method and system implementing it. More particularly the invention relates to a method for creating placeholders for notes to be left by, and read by, users of handheld communication apparatus provided with imaging means, such as a camera.

### 2. Description of the Related Art

Handheld portable devices, such as cellular phones, are widely used for direct communication between users, but their utility in off-line communication as of today is limited. Although it would be highly desirable to be able to "leave messages" in various locations, which can be read by authorized users, without the need to sensitive messages to a specific user at a specific time, the art has so far failed to provide a simple and convenient way to do so. A tense have been made in the art, based on GPS or QR codes, but these have not resulted in widely usable and practically convenient solutions to this problem.

For example US2009/0081959 titled "Mobile Virtual and Augmented Reality System", presents a method for creating a "virtual graffiti", allocating it to a specific geographical location, or object, uploading it to a server and allowing authorized viewers to download the graffiti when they are in geographical proximity. The invention uses GPS for geographic positioning or alternatively if the GPS fails to operate it suggests a Wi-Fi based indoor location system. Practically however this reference does not refer to the limitations of the use of the mobile phone. It does not enable
directly transferring of information between users and does not take into accounts the resource limits that characterize the use of the mobile phone.

A further example is US2008/0122871, titled "Federated Virtual Graffiti".

Again this is an example that enables associating virtual messages based on geographic locations and restricting access to particular users. However this system requires the usage of a specific virtual board, in order to overcome the resources limitations of the mobile phone in locating the messages left. Thus, this application as well as the 959' patent application, do not offer a comprehensive solution, which specifically tackles the mobile phone limitations.

US-2008/0147730-A1 discloses a method and system for providing location specific image information. The method comprises capturing an image of an object from a mobile device, determining a location of the mobile device, recognizing the object from a database of images from their location, and retrieving the location specific information associated with the object.

US-2009/0096875-A1 discloses a camera fitted information retrieval device. A camera image obtained by a camera, together with additional information including position information provided a GPS device is transmitted to a retrieval service server. The retrieval service server retrieves a target within a photography range from the current position of the camera and recognizes the target by image recognition. Target related information is returned to the camera.

Accordingly, it is an object of the present invention to provide a method and a system suitable to implement it, which overcomes the problems of the prior art and permits users to exchange location-based messages in a simple and convenient way, using readily available devices, such as cellular phones.

Other objects and advantages of the invention will become apparent as the description proceeds.

### SUMMARY OF THE INVENTION

The invention relates to providing location-based messages by locating a suitable placeholder for a message within a physical surrounding using a handheld device provided with image acquisition apparatus, and associating a written or visual or audio message, or a combination of two or more of them, with an image that identifies said placeholder, said association being carried out in a server adapted to communicate with said handheld device.

According to a first aspect of the present invention there is provided a method as defined in claim 1.

According to a second aspect of the present invention there is provided a handheld device as defined in claim 4.

### BRIEF DESCRIPTION OF THE DRAWINGS

In the drawings:
Fig. 1 is an example of valid object detection by a user;
Fig. 2 is an example of an invalid object that is filtered out;
Fig. 3 schematically illustrates a detection algorithm according to one embodiment of the invention;
Fig. 4 schematically illustrates the object description taking place during the detection process;
Fig. 5 is an example of use of the invention; and
Fig. 6 is another example of use of the invention.

### DETAILED DESCRIPTION OF EXEMPLARY EMBODIMENTS

The invention enables the creation of augmented messages on both indoor and outdoor surfaces. The invention enables the sharing of the content created using a server/PC or directly using MMS between devices. As will be further explained below, the invention is especially designed to suit mobile phones and therefore uses the phone's resources in an efficient manner. Furthermore, the invention enables the creation and/or augmentation of virtual objects, which can be sent and received as augmented messages.

The different stages of the process performed according to the invention will be further described below.

### Stage 1 - Choosing an Object

User "A" points the mobile phone's camera, while in preview mode, looking for a potential object to add to a virtual note. The potential object is picked by an algorithmic engine based on the process that is described below, and is then marked for the user's reference.

As will be apparent to the skilled person, not every object is suitable for the purpose of the invention. It must be a distinguishable object, which can be visually isolated from the environment. Furthermore, the object must contain salient textural features or other information that provides it with attributes that enable unambiguous identification among the plurality of objects that surround it. The detection stages, in which certain candidate objects in the real world are detected, selected and uniquely described, are part of the invention. The selection of a proper subset of the world objects also significantly reduces the resources used by the phone for the objects recognition.

Other than the requirement that the object is unambiguously identified, there is no limitation on the nature of the object that can be used in conjunction with the invention. The types of filtered objects (to which notes may be assigned) may vary in different applications.

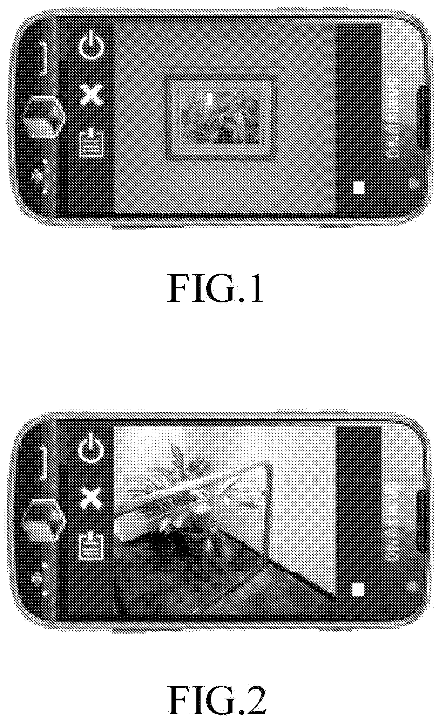

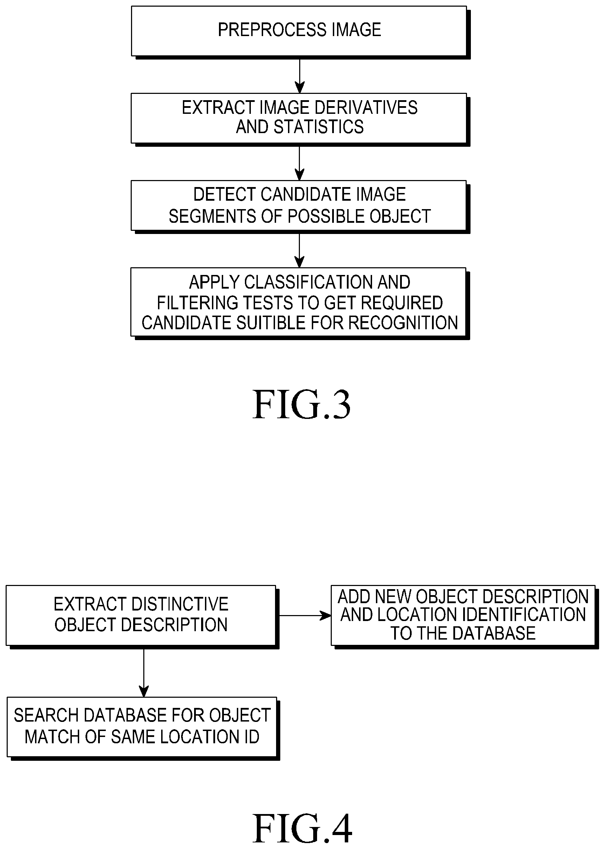

The following example will further illustrate this stage of the invention. Figs. 1 and 2 show an example of object detection. In this example object detection and notes assignment are limited to planar objects on walls like signs and pictures, other world objects are filtered out. Fig. 1 illustrates the valid depiction of a planar object (in this example a picture), which is framed by a thin frame, which indicates to the user that the object has been selected. An example of the process is described in Fig. 3 and Fig. 4 and is further detailed below. Fig. 2, in contrast, shows a three-dimensional object, which according to the definition given the engine in this particular example is an invalid object type, and is therefore not selected in the process.

As will be apparent to the skilled person, the invention is not limited to any specific detection algorithm and can function with any suitable detection method. The detection algorithm according to one suitable embodiment of the invention follows the stages illustrated in Fig. 3. Said stages comprise pre-processing the image, extracting image derivatives and statistics, detecting within one or more candidate objects image segments suitable to carry out the process, and then applying classification and filtering tests to obtain from among those candidates that are suitable for recognition.

The preprocessing of the image includes converting the image to workable format and size and applying required image filtering algorithms, e.g., to smooth enhance or de-noise the image. Low level image information are collected including various image derivatives (e.g., gradient) and additional statistics to provide inputs for next stages. Next, a segmentation algorithm finds candidate image segments (e.g., region of high gradient and textural features content with desirable shape properties). Finally validation tests are applied to verify that the chosen segments comply with required shape and size, image frame location and sufficient textural information constrains. In this way the matching algorithm is limited to a desired pre-defined part of the world scene, reducing potential processing in next stages. A planarity check of the object is verified when the object is finally matched to a database object,

This is further discussed in the description of Fig. 4 below. For instance, in the example in which planar picture objects are detected, as in Fig. 1, the image is preprocessed for color gradients information. The gradients image is then segmented using fast hierarchical projections of image sub-regions on image axes. In this process gradient image content is projected on two orthogonal axes and then the two projected functions are analyzed for candidate 2D regions. This process can be applied to several axes systems and relevant sub-regions can be, hierarchically, further analyzed by their projections. In this way regions with high gradient content can be identified with a fast process which, due to the embedded integration, is robust to image local artifacts. Features that are analyzed in this respect are related to the object itself and are aimed at determining its suitability and ease of identification. Regions that comply with several repeatability, size, shape, statistics and feature content classification tests are defined as valid candidates. For example, in a particular illustrative implementation the detection was restricted to a single candidate region
near the image center with minimal and maximal size and with shape constrains. In addition repeatability was verified by tracking the region temporally for several image frames and its textural image data was verified to be sufficient for effective image match process.

Once an object is chosen it is marked and added to a database. The object is identified using two kinds of attributes:
The first type of attributes is related to the location characteristics of the object (e.g., geographic location, network by which it is chosen, orientation in respect of the camera, etc). These attributes allow filtering of a relative small subset of objects from the database for comparison, thus accelerating the search in database and candidate object comparison.
The second types of attributes are the specific object distinctive description, based on extracted features and image statistics from object views. The complete description enables distinctive and repeatable identification of the object as well as efficient database search, as schematically illustrated in Fig. 4. The feature match provides also means for additional checks, such as the object planarity check that was referred to above. Based on the match, it is verified that the transformation of world object points to the camera image points comply with a plane to plane projection.

### Object as an address

An object can now be defined as an address. The unique identification created according to the invention enables the sending and receiving of virtual messages to and from the object (as opposed to sending and receiving messages to and from people). This can be done without the need to keep any proximity to the object. Thus, once an object that exists in the real world
receives an electronic ID and is added to a database it becomes an address which can send and receive messages (of course, through the action of a user provided with a device operating according to the invention).

In addition, communication among people is enhanced with an additional context from the real world. The numerous combinations of user senders, receivers and places (objects) enrich the ways in which communication among users can be done.

### Stage 2 - Attaching a Virtual Message to the Image

In this stage User "A" selects one object from the signed candidates using the mobile phone (or other portable device) GUI (as illustrated in Fig. 1).

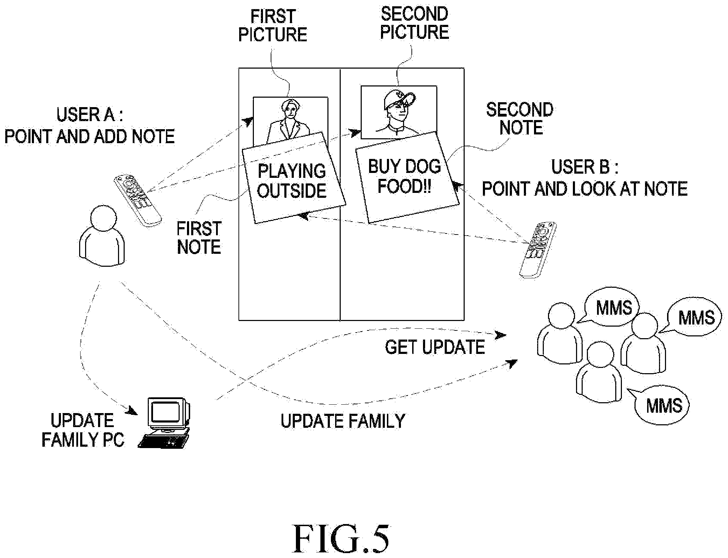

Now the user may add/attach a new virtual note to it. This process is schematically illustrated in Fig. 5. The virtual note can contain text, drawings, the attachment of files (audio video), etc. The user virtually attaches the note to the object, and then the note is tagged, and stored in a database.

In one embodiment of the invention the objects notes are stored in a shared database using a server. A user may also choose to leave himself/herself a virtual message. Moreover, to simplify the note's content creation, a note template content creation tool can be provided.

### Stage 3 -Note Detection

In this stage User "B" uses the mobile phone's camera in the preview mode to search and detect potential objects (similarly to the process that is carried out in Stage 1). In certain applications it may be expedient to target specific objects known to all users of the system. As in such cases the potential objects are predefined, the search focuses only on them.

As described above, the invention operates a filtering mechanism, which defines potential objects and an engine then searches and identifies the potential objects (for example rectangular surfaces). The usage of this filtering stage achieves the following benefits:
First, the selective detection reduces the world information that has to be processed. This allows limited computing resources (CPU and memory) system such as mobile phone and other hand-held devices, to handle the recognition task. Secondly, the candidate objects provide sufficient image information to enable feasible object recognition based on their image features, thus enabling robust recognition with low mismatch and high detection probabilities.

Upon the identification of a potential object the engine checks within a database whether the current object exists in the database, and if so, if any note was virtually left on it. The database includes world objects or places, each of which can be related to users notes and additional data.

The search in this database is aided using the various attribute keys described above. Also, it will check if the user has permission to receive or see the note, thus enabling discrete communication of many users groups using the same objects for notes assignment. In other words, if the object selected is in the public domain (for instance, is located in a shopping mall) different groups of people may use it to distribute messages among the members, without the danger of having their messages seen by unauthorized people. In public places it may even be desirable to designate special objects as "message boards", to facilitate the use of the invention.

Additional examples of use are discussed briefly below. The kitchen is a useful place to leave messages for the family and an example of use is schematically shown in Fig. 5.

In this example User A points at a first picture on the refrigerator and adds to it a first note stating that he is outside, playing. He then points at a second picture on the refrigerator and leaves a second note asking a member of his household to buy dog food. Of course, both notes could have been left on the same picture, but in this case User A may want to use separate placeholders for his notes, either because he wants different members of his household to pay more attention to different notes, or for any other reason. In this particular example the family PC is used as the server that operates the invention. Accordingly, the notes left by User A are updated to the PC. If desired, an update can be sent immediately to selected members of the family, e.g. via MMS or email.

Alternatively, the other members of the family will only become aware of the messages (or of one or more of them, if some of them have been immediately relayed) when they come into the kitchen and point at the placeholder, which is in this example a picture or part of the picture attached to the refrigerator.

User B, who has not received the message otherwise walks into the kitchen, points his device at the pictures on the refrigerator, discovers that one or more messages have been left and retrieves it by communicating with the home PC.

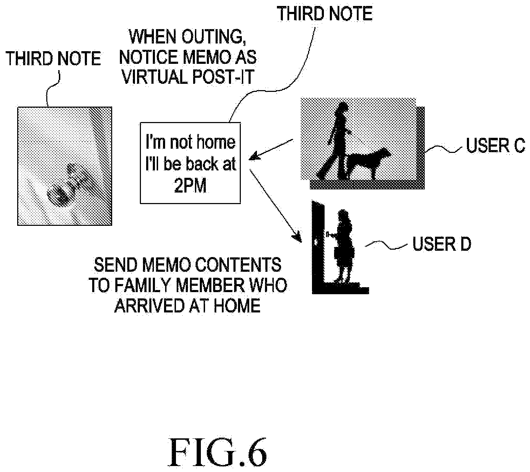

In another example the house door can be used to post messages, as illustrated in Fig. 6, which is self-explanatory and requires no additional description. For example, User C leaves a third note on a third picture when outing, then User D confirms the third note by selecting an object, i.e. door, with using the handheld portable device.

All the above description has been given for the purpose of illustration and is not meant to limit the invention in any way, except as defined in the claims to follow.

## Claims

1. A method of a handheld device for providing location-based messages, the method comprising:
displaying at least one object captured by an image acquisition apparatus included in the handheld device;
identifying, by an algorithmic engine, a first planar object among the at least one object;
selecting, by a user of the handheld device, the first planar object;
generating at least one message; and
transmitting, to a server, the message and information uniquely identifying the first planar object;
wherein the transmitted message and information permits the message to be displayed in at least one other device if the at least one other device has permission to receive and display the message, when the first planar object is captured by the at least one other device.

2. A method according to claim 1, further comprising:
identifying a second planar object using the image acquisition apparatus;
communicating with the server to check whether an image of the second planar object exists in a database at the server and if so whether any messages are associated with the potential object; and
retrieving at least one message from the server.

3. A method according to claim 1 or 2,
wherein the generated message and the retrieved message comprise at least one of a written message, a visual message and an audio message.

4. A handheld device including an image acquisition apparatus for providing location-based messages, the handheld device being configured to:
display at least one object captured by the image acquisition apparatus;
identify, by an algorithmic engine, a first planar object among the at least one object;
select, by a user of the handheld device, the first planar object;
generate at least one message; and
transmit, to a server, the message and information uniquely identifying the first planar object;
wherein the transmitted message and information permits the message to be displayed in at least one other device if the at least one other device has permission to receive and display the message, when the first planar object is captured by the at least one other device.

5. A handheld device according to claim 4, wherein the handheld device is further configured to:
identify a second planar object using the image acquisition apparatus;
communicate with the server to check whether an image of the second planar object exists in a database at the server and if so whether any messages are associated with the potential object; and
retrieve at least one message from the server.

6. A handheld device according to claim 4 or claim 5,
wherein the generated message and the retrieved message comprise at least one of a written message, a visual message and an audio message.

## Patentansprüche

1. Verfahren eines Handgeräts zur Bereitstellung von standortbasierten Nachrichten, wobei das Verfahren Folgendes umfasst:
Anzeigen von zumindest einem Objekt, das durch eine Bildaufnahmevorrichtung erfasst wurde, die in dem Handgerät enthalten ist;
Identifizieren eines ersten planaren Objekts unter dem zumindest einen Objekt durch eine algorithmische Maschine;
Auswählen des ersten planaren Objekts durch einen Benutzer des Handgeräts;
Erzeugen von zumindest einer Nachricht; und
Übertragen der Nachricht und von Informationen, die das erste planare Objekt eindeutig identifizieren, an einen Server;
wobei die übertragene(n) Nachricht und Informationen ermöglichen, dass die Nachricht in zumindest einem anderen Gerät angezeigt wird, wenn das zumindest eine andere Gerät berechtigt ist, die Nachricht zu empfangen und anzuzeigen, wenn das erste planare Objekt durch das zumindest eine andere Gerät erfasst wird.

2. Verfahren nach Anspruch 1, ferner umfassend:
Identifizieren eines zweiten planaren Objekts unter Verwendung der Bildaufnahmevorrichtung;
Kommunizieren mit dem Server, um zu prüfen, ob ein Bild des zweiten planaren Objekts in einer Datenbank an dem Server vorhanden ist, und falls dies der Fall ist, ob dem potentiellen Objekt Nachrichten zugeordnet sind; und
Abrufen von zumindest einer Nachricht aus dem Server.

3. Verfahren nach Anspruch 1 oder 2,
wobei die erzeugte Nachricht und die abgerufene Nachricht zumindest eine von einer schriftlichen Nachricht, einer visuellen Nachricht und einer akustischen Nachricht umfassen.

4. Handgerät, beinhaltend eine Bildaufnahmevorrichtung, zur Bereitstellung von standortbasierten Nachrichten, wobei das Handgerät für Folgendes konfiguriert ist:
Anzeigen von zumindest einem Objekt, das durch die Bildaufnahmevorrichtung erfasst wurde;
Identifizieren eines ersten planaren Objekts unter dem zumindest einen Objekt durch eine algorithmische Maschine;
Auswählen des ersten planaren Objekts durch einen Benutzer des Handgeräts;
Erzeugen von zumindest einer Nachricht; und
Übertragen der Nachricht und von Informationen, die das erste planare Objekt eindeutig identifizieren, an einen Server;
wobei die übertragene(n) Nachricht und Informationen ermöglichen, dass die Nachricht in zumindest einem anderen Gerät angezeigt wird, wenn das zumindest eine andere Gerät berechtigt ist, die Nachricht zu empfangen und anzuzeigen, wenn das erste planare Objekt durch das zumindest eine andere Gerät erfasst wird.

5. Handgerät nach Anspruch 4, wobei das Handgerät ferner für Folgendes konfiguriert ist:
Identifizieren eines zweiten planaren Objekts unter Verwendung der Bildaufnahmevorrichtung;
Kommunizieren mit dem Server, um zu prüfen, ob ein Bild des zweiten planaren Objekts in einer Datenbank an dem Server vorhanden ist, und falls dies der Fall ist, ob dem potentiellen Objekt Nachrichten zugeordnet sind; und
Abrufen von zumindest einer Nachricht aus dem Server.

6. Handgerät nach Anspruch 4 oder Anspruch 5,
wobei die erzeugte Nachricht und die abgerufene Nachricht zumindest eine von einer schriftlichen Nachricht, einer visuellen Nachricht und einer akustischen Nachricht umfassen.

## Revendications

1. Procédé d'un dispositif portatif destiné à délivrer des messages basés sur une localisation, le procédé comprenant :
l'affichage d'au moins un objet capturé par un appareil d'acquisition d'image inclus dans le dispositif portatif ;
l'identification, par un moteur algorithmique, d'un premier objet planaire parmi l'au moins un objet ;
la sélection, par un utilisateur du dispositif portatif, du premier objet planaire ;
la génération d'au moins un message ; et
la transmission, à un serveur, du message et d'informations identifiant de manière unique le premier objet planaire ;
dans lequel le message transmis et les informations autorisent l'affichage du message sur au moins un autre dispositif si l'au moins un autre dispositif a l'autorisation de recevoir et d'afficher le message, quand le premier objet planaire est capturé par l'au moins un autre dispositif.

2. Procédé selon la revendication 1, comprenant en outre :
l'identification d'un deuxième objet planaire en utilisant l'appareil d'acquisition d'image ; la communication avec le serveur pour contrôler si une image du deuxième objet planaire existe dans une base de données au niveau du serveur et si c'est le cas, si de quelconques messages sont associés à l'objet potentiel ; et la récupération d'au moins un message depuis le serveur.

3. Procédé selon la revendication 1 ou 2, dans lequel le message généré et le message récupéré comprennent au moins l'un d'un message écrit, d'un message visuel et d'un message audio.

4. Dispositif portatif incluant un appareil d'acquisition d'image destiné à délivrer des messages basés sur une localisation, le dispositif portatif étant configuré pour :
afficher au moins un objet capturé par l'appareil d'acquisition d'image ;
identifier, par un moteur algorithmique, un premier objet planaire parmi l'au moins un objet ;
sélectionner, par un utilisateur du dispositif portatif, le premier objet planaire ;
générer au moins un message ; et
transmettre, à un serveur, le message et des informations identifiant de manière unique le premier objet planaire ;
dans lequel le message transmis et les informations autorisent l'affichage du message sur au moins un autre dispositif si l'au moins un autre dispositif a l'autorisation de recevoir et d'afficher le message, quand le premier objet planaire est capturé par l'au moins un autre dispositif.

5. Dispositif portatif selon la revendication 4, dans lequel le dispositif portatif est en outre configuré pour :
identifier un deuxième objet planaire en utilisant l'appareil d'acquisition d'image ; communiquer avec le serveur pour contrôler si une image du deuxième objet planaire existe dans une base de données au niveau du serveur et si c'est le cas, si de quelconques messages sont associés à l'objet potentiel ; et
récupérer au moins un message depuis le serveur.

6. Dispositif portatif selon la revendication 4 ou 5, dans lequel le message généré et le message récupéré comprennent au moins l'un d'un message écrit, d'un message visuel et d'un message audio.
